# EUROPEAN PATENT SPECIFICATION

(11) **EP 1 167 811 B1**
(45) Date of publication and mention of the grant of the patent: **02.11.2006**
(21) Application number: 01113320.4
(22) Date of filing: 31.05.2001
(51) Int. Cl.: F16D 13/70, F16F 15/30

(54) **Variable mass crankshaft of reciprocating engines, preferably for automotive purposes.**
Kurbelwelle mit veränderlicher Masse für Hubkolbenmotoren, insbesondere für Kraftfahrzeuge
Vilebrequin à masse variable pour moteurs alternatifs, en particulier pour véhicules automobiles

(30) Priority: 01.06.2000 IT MI001223
(43) Date of publication of application: 02.01.2002
(73) Proprietor: SISTA S.r.l., 10137 Torino (IT)
(72) Inventor: Morelli, Alberto, 10131 Torino (IT)
(74) Representative: Hauck, Graalfs, Wehnert, Döring, Siemons

(56) References cited:
- DE-A- 3 046 612
- DE-A- 3 643 272
- DE-A- 19 704 516
- FR-A- 911 612
- US-A- 4 262 552

## Description

The invention pertains to a variable mass crankshaft of reciprocating engines.

Variable mass crankshaft of reciprocating engines obtained by the disengagement of the flywheel (V) having the parts always rotating with the shaft characterized by the fact that the disk (DP) providing one of the annular pressure surfaces to the "clutch" disk is shaped as a thin flange and is preferably built in light alloy and that the said disk (DP), bearing on its periphery the teethed crown (CA) fit to start the engine, is shaped following a thin cylindrical hollow cup providing inner space for the flywheel (V).

The flywheel is that part of a reciprocating engine providing adequate angular inertia to its shaft in order to limit the *irregularity* well below 100%. Otherwise, at rotating speeds as low as is requested by the *idling* conditions, the *irregularity* could attain 100 % resulting in a stop of the engine. Besides, even though the steady state is assured, an undesirable vibration could be transmitted to the body.

On the other hand, if the angular speed is increased, the *irregularity* will reduce to small values, especially when the transmission is engaged, the whole vehicle mass acting as a regulator, as it is well known.

DE-OS 36 43 272 discloses a clutch having a flywheel fixedly connected to the crankshaft, the clutch having an additional mass coupled to the gear shaft by frictional engagement and which is disengageable from the gear shaft by means of a centrifugal device above a certain rotational speed. The disengagement of the additional mass from the gear shaft over a certain rotational speed offers the advantage that the friction power and wear at that position are reduced but, at the same time, introduces some side effects which reduce the driving comfort of the car at high rotational speeds. To get round the side effects the clutch of document DE-OS 36 43 272 comprises an additional centrifugal device which allows a direct connection of the additional mass to the crankshaft above a given rotational speed.

The technical problem of the invention is to provide as crankshaft having high inertia when idling and low inertia during the motion of the vehicle. The problem is solved according to claim 1.

According to the invention the flywheel is able to disengage from the crankshaft when the speed exceeds a certain value have been invented aiming at both, reducing the vehicle inertia during the motion and increasing the engine shaft inertia when *idling .*

Advantages such as an increased acceleration of the vehicle, reduced fuel consumption and consequent environmental benefits are obtained.

Furthermore, if the flywheel is engaged to the shaft by means of a friction device, the resulting alternate skidding flywheel-to-shaft will act as a damper of the engine shaft oscillations until the speed of disengagement is attained.

The "clutch" is that part of the "driveline" of motorcars equipped by manually operated gearbox, providing to disengage the transmission of motion from the engine to the wheels as follows:
- at the start (and stop) of the car
- during the change of gear.

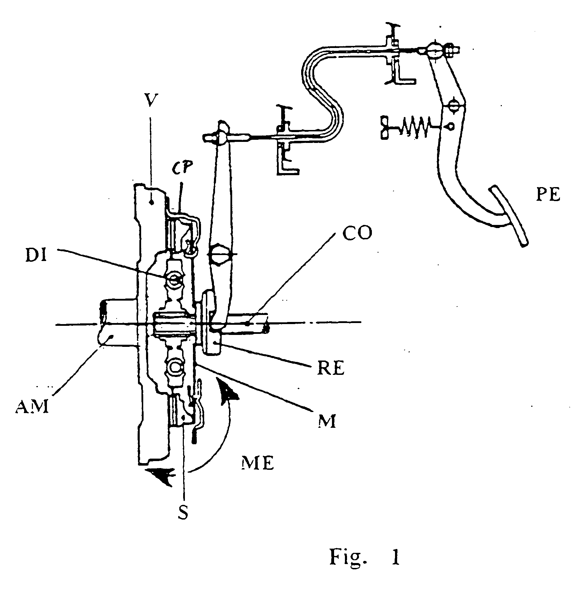

In a motorcar, flywheel and clutch are the "interface" elements of the propulsion system. Normally, the flywheel is associated with the engine, the clutch with the transmission. However, they are strictly integrated one another, as shown in Fig. 1. In fact, one of the two flat annular surfaces associated with the disk (DI) belongs to the flywheel, the other to the pressure-plate (S) of the "clutch".
Fig. 1 shows:
1 - The so called *mechanism* (ME) consisting of the clutch-cover (CP) and the spring (M) pushing on the pressure-plate (S)
2 - The disk (DI) rotating with the driven shaft (CO)
3 - The control system operated by the driver to engage and disengage the "clutch".
   The driver disengages the "clutch" by pushing on the pedal (PE) moving axially the bearing (RE) thus clearing the disk (DI) from the force it is pressed by the spring (M) between the flywheel (V) and the pressure-plate (S).

It is worth mentioning the fact that the pressure-plate (S), the spring (M) and the clutch-cover (CP) rotate at the same speed of the flywheel (V). Therefore, it is not compulsory for them to be light.

On the contrary, the disk (DI) must be as light as possible, its inertia being directly proportional to the energy dissipated by the "synchro-mesh" device of the gearbox.

### Description

The invention refers to a flywheel that can be automatically disengaged from engine shaft. Furthermore, it aims at reducing to a minimum the angular inertia of the parts rotating together with the engine shaft when the flywheel is disengaged.

On the other hand, another characteristic of the invention is that the angular inertia of the parts connected to the engine shaft when the flywheel is engaged are high and effective compatibly with the space available and with the cost.

To these and other ends a number of solutions will be described with the aid of figures from 2 to 5. Among additional advantages dealing with the invention, the following are mentioned:
- damping effect of the shaft oscillations at low speeds of rotation in order to obtain a smooth operation of the transmission
- reduction of the aerodynamic resistance of rotating parts at high speed
- low cost.

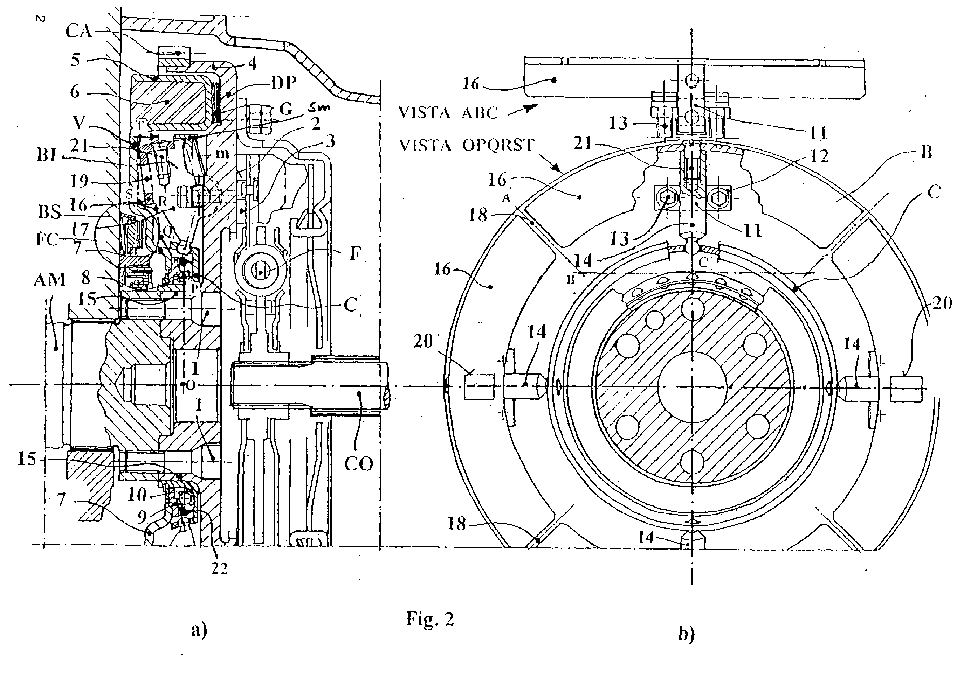

With reference to Fig. 2 showing the overall device flywheel-clutch, a) is a section through the shaft axis and b) a partial section normal to it.

A flanged disk (DP) having an annular flat surface (2) is fixed by bolts (1) to the engine shaft (AM). The surface (2) complies perfectly with the friction gasket 3 of the clutch disk (F), as usual. However, the material is preferably a light alloy of aluminium. A teethed crown (CA) made by material suitable to the purpose of starting the engine is forced in the peripheral portion of the disk, which is shaped like a cup.

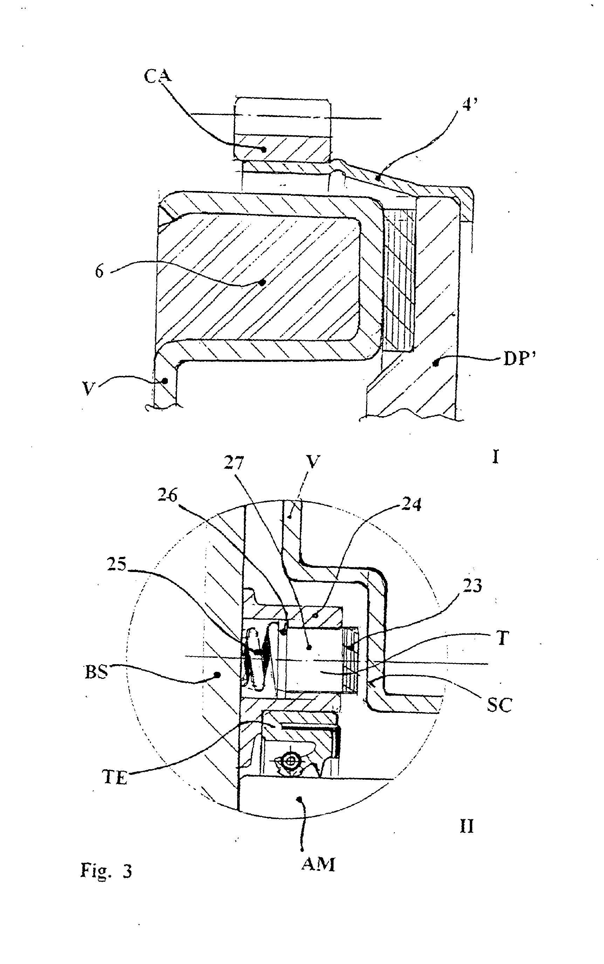

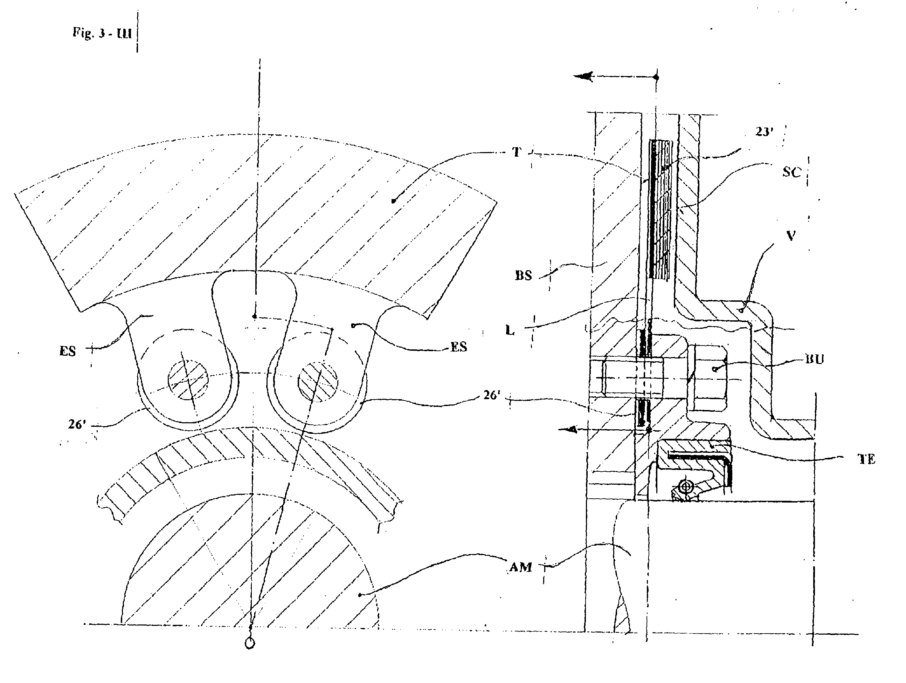

As an alternative (Fig. 3), the crown can be connected to the disk using an annulus (4') made from sheet metal (steel), simplifying the construction of the flanged disk

The detachable part of the flywheel (V) is located inside the cup thus reducing as much as possible the axial length of the complex. The said flywheel (V) is preferably built from a moulded sheet metal and shaped as a circular channel (5) hosting a thick and heavy annulus as of lead, (6). Other heavy and more resistant materials can also be used such as copper, bronze or even tungsten. In these cases the heavy annulus will be directly linked to the hub (7) of the flywheel, by bolts for example.

At the interface flywheel (V)/disk (DP), a friction gasket (G), glued to the disk, is compressed by a spring (m), preferably of the diaphragm type, with a force enabling the transmission of a friction torque. This torque is higher than the (aerodynamic) resistance torque required by the flywheel to rotate. It does not exceed, however, the important inertia torques caused by accelerations associated with engine torque modulation in a cycle, resulting in alternate skidding/slipping oscillations of the flywheel vs. disk. A damping effect is thus obtained having influence on the vibrating response of the driven shaft (CO). As a consequence, the so called "wrestling" of the synchro-mesh devices in the gearbox can be reduced.

The hub (7) of the flywheel includes an angular ball bearing (8) with spheres rolling on the rings (9) and (10). The external ring (9) is fixed (welded) to the flywheel , the other ring (10) is integral with the collar (C), where the rocker arms (BI) engage as already claimed in the Italian Patent 01.305191.

The collar (C) can move axially on the hub (15) of the disk (DP), involving the rotation of the rocker arms (BI), preferably in number of four and equally spaced (90°), around their pivots (11). These pivots (11) are fitted with two flanges (12) and two bolts (13) that fix them stiffly to the disk (DP). A centrifugal mass preferably shaped as a curved "L" profile (16), extends by an angle of ± π/n on both sides of the central body (17) of the n rocker arms. Therefore, when the flywheel is disengaged, the "L" profile takes the shape of a continuous ring offering a low aerodynamic resistance to the revolution motion of the complex: disk (DP), rocker arms (BI), spring (m), with relevant ring (Sm) having the task to distribute the force created by the rocker arms to the spring with a uniform pressure.

When disengaged, the flywheel (V) must move axially in order to both disengage it from the disk (DP) and reduce the spring (m) reaction to a value properly tuned to the speed it will engage again. For this purpose, there is a "butée", in the ring (Sm) limiting the spring max. deflection. As a consequence, the flywheel will move axially by a well defined amount during its disengagement.

Furthermore, after the disengagement the flywheel is stopped by a braking device (FC) in order to prevent an increase of its speed substantially caused by the aerodynamic trailing of the parts rotating together with the engine shaft. If this speed should result higher than the speed at which the flywheel will engage again (at 1400 RPM, a not high speed, even though well above the 650 RPM *idling* speed, for example), an unwanted thrust in a forward direction of the car would result.

In order to overcome this defect, Fig. 3.II and 3.III show two examples of the braking device differing from those claimed in the Italian Patent No. 01 305 191 ("Perfezionamenti ai volani disinnestabili di motori endotermici alternativi per autoveicoli") mainly for the presence of elastic supports of the friction gaskets (23) and (23'). In the solution of Fig. 3.II the friction gaskets (23) are attached (glued) to the cylinders (27), whose return stroke is limited by the shoulder (26). The whole elements (T) can move axially when the reaction force of the pre-charged spiral spring (25) is overcome, thus applying to the flywheel a braking torque sufficient to stop it in a reasonably short time. In fact, this torque is dependent on the spring (25) reaction, which is in turn depending from the pre-charge value of the spring itself and axial movement of the pressure surface (SC) of the flywheel during its disengagement phase. This axial movement being of a defined amount, as already explained, the spring is sufficiently flexible in order to also take into account the wear of the friction material.

In the solution of Fig. 3.III, requiring an even lesser axial space, the support of the friction gaskets (23') is provided by a piece of thin metal sheet (L) having flexible extensions (ES) working as cantilever laminar springs. The washers (26') assure the movement of the gaskets by creating a play between the flat rear end of the basement (BS) of the engine and the springs exactly equal to the thickness of the washers. The whole device is fixed to the engine basement preferably by the same bolts (BU) of the element supporting the sealing element (TE) of the engine shaft (AM).

A further contribution to the reduction of the angular inertia of the mass rotating with the engine shaft concerns the design of the clutch, namely with its so called "mechanism" (ME of Fig. 1).

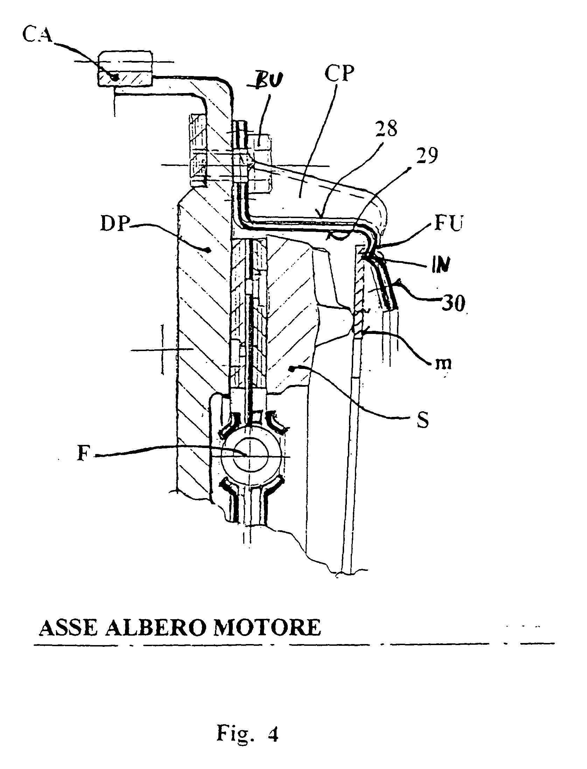

Fig. 4 shows a section, through the axis of the engine shaft, of the "mechanism" following the invention, including the disk (DP) and the disk (F) of the clutch In order to reduce the angular inertia, the pressure-plate (S) is also built in light alloy of aluminium similarly to the disk (DP). The clutch-cover provides the hinge axis (IN) of the diaphragm spring (m) in the most peripheral position of the spring itself, thus reducing the inner extension of the cover to a minimum. As it is well known, the clutch-cover should be as stiff as possible. Therefore, it is built by assembling two thin metal sheets (28) and (29) by spot welding (30). Out of the flange where bolts as (BU) connect the cover to the disk (DP), the thin sheet (28) is kept apart from (29) in order to form particularly stiff and light box shaped sections.

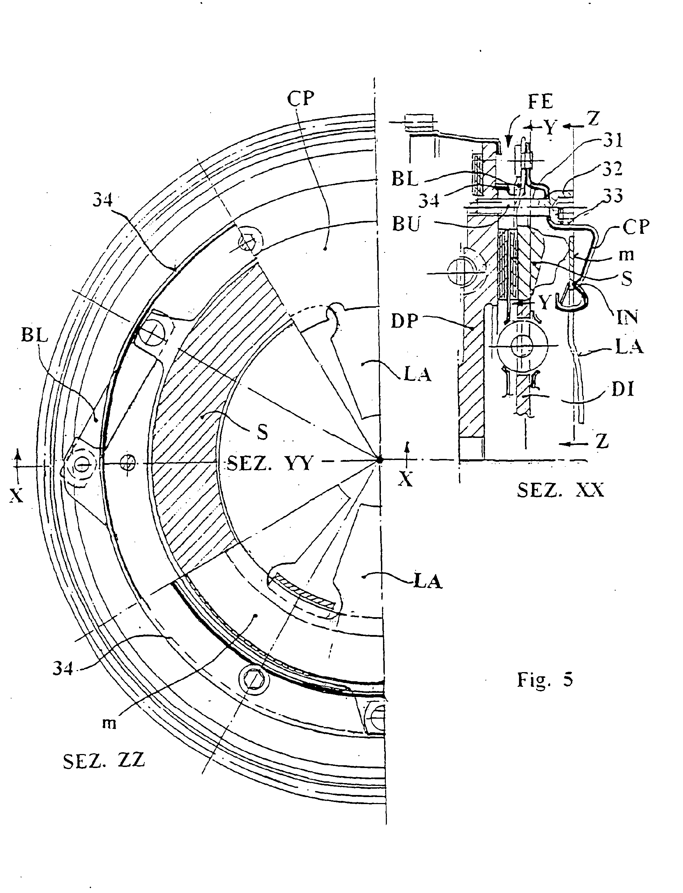

Another configuration of the clutch-cover (CP) is shown in Fig. 5. It aims at also reducing the power required by the aerodynamic torque when the engine runs at high speed. For this purpose the external shape of the cover is such as to form an annulus, as smooth as possible, and incorporating most of the elements of the clutch Therefore, only a small part of the usual flexible rods (BL, in number of three), connecting the pressure-plate to the clutch-cover, protrudes outside the cover itself through the slots (FE) located in a small portion of the external wall (34) and acting also as outlets for the cooling air flow. Locally as in (33), the wall (34) is shaped in order to host the bolts (BU) fixing the cover to the disk (DP). In order to contribute to the stiffness the head (32) of the bolts adhere perfectly with to cover in (33). This particularity together with the long stem of the bolts prevents them from unscrewing spontaneously. The bolts (BU), preferably in number of six, are equally spaced (60°). In order to contribute to the stiffness of the supports of the spring (m) at the hinge axis (IN), these supports are accordingly located close to the bolts and in number of six. Therefore, twelve levers (LA) are integral to the diaphragm spring resulting in a modular configuration of the complex. This arrangement will simplify the construction, reduce weight (and inertia) together with the cost.

## Claims

1. Crankshaft for a reciprocating engine, a clutch disc (F) mounted to a gear shaft (CO), a crankshaft assembly associated with the crankshaft (AM) and a pressure plate (S) associated with the gear shaft (CO), both having annular pressure surfaces for the clutch disc (F), the crankshaft assembly comprising a flanged disc (DP) , the flanged disc (DP) being shaped as a thin cylindrical hollow cup providing inner space for a flywheel (V), the flanged disc (DP) being further provided with the annular pressure surface for the clutch disc (F) and bearing on its periphery a toothed wheel rim (CA) **characterized in that** the fly wheel (V) is coupled by means of a spring (m) to the flanged disc (DP) and **in that** the flanged disc (DP) comprises means to disengage from the flywheel (V) when a particular rotational speed is reached.

2. Crankshaft for a reciprocating engine according to claim 1, **characterized in that** said means to disengage from the flywheel (V) comprise equally spaced rocker arms (BI) fixed to the flanged disc (DP), said rocker arms (BI) countervailing the coupling action of the spring (m) when said particular rotational speed is reached.

3. Crankshaft for a reciprocating engine according to claim 2, **characterized in that** said rocker arms (BI) comprise a central body (17) swinging on a flanged pivot (11) fixed to the flanged disk (DP) by bolts (13).

4. Crankshaft for a reciprocating engine according to anyone of claims 2 and 3, **characterized in that** each rocker arm (BI) is partially shielded by a centrifugal mass (16), the set of the centrifugal masses (16) forming a continuous ring offering a low aerodynamic resistance.

5. Crankshaft for a reciprocating engine according to claim 4, **characterized in that** the centrifugal masses (16) are fixed to the central body (17) of the rocker arms (BI) by coupling a teeth (19) to a slot (20) by means of a bolt (21) or through welding.

6. Crankshaft for a reciprocating engine according to anyone of the preceding claims, **characterized in that** it comprises a hub (7) of the flywheel (V) and a ball bearing (8) fitted with a grease sealing lip (22), the external ring (9) of the ball bearing being fixed to the hub of the fly wheel and the internal ring (10) being integral with a collar (C) engaging the rocker arms (BI).

7. Crankshaft for a reciprocating engine according to anyone of the preceding claims, **characterized in that** the flywheel (V) is built from a moulded metal sheet and is shaped so as to provide a first annular surface for engagement with a friction gasket (G) arranged on the flanged disc (DP) and a second annular surface (SC) for engagement with a braking device (FC) when the flywheel (V) is disengaged from the flanged disc (DP).

8. Crankshaft for a reciprocating engine according to claim 7, **characterized in that** the metal sheet is shaped as an annular channel (5) hosting heavy material.

9. Crankshaft for a reciprocating engine according to anyone of claims 7 or 8, **characterized in that** the braking device (FC) comprises friction elements (T) and is supported by a same body hosting a sealing ring (TE) of the engine shaft (AM).

10. Crankshaft for a reciprocating engine according to anyone of the claims 2 to 9, **characterized in that** the pressure force exerted by the spring (m) on the flywheel (V) when the flywheel is engaged to the flanged disc (DP) is higher than the average force required to assure the rotating motion of the flywheel (V) and lower than the force corresponding to the torque peak values occurring at the revolution speeds at which the flywheel is engaged to the flanged disc (DP).

11. Crankshaft for a reciprocating engine according to anyone of the preceding claims, **characterized in that** the pressure plate (S) is built in light alloy.

12. Crankshaft for a reciprocating engine according to anyone of the preceding claims, **characterized in that** the pressure plate (S) is pressed against the flanged disc (DP) under the action of a clutch-cover (CP) and a diaphragm spring (M), the clutch-cover (CP) being built by assembling thin metal sheets to form a box-shaped element.

13. Crankshaft for a reciprocating engine according to claim 12, **characterized in that** the clutch-cover (CP) consists of a peripheral cylinder (34) within which the pressure-plate is arranged together with connecting rods (BL) partially protruding outside the cylinder (34) through ventilation slots (FE).

14. Crankshaft for a reciprocating engine according to claim 13, **characterized in that** the clutch-cover (CP) is connected to the flanged disc (DP) by means of long bolts (BU)having a cylindrical head (32) hosted in special seats (33) of the cylinder (34).

15. Crankshaft for a reciprocating engine according to claim 14, **characterized in that** the diaphragm spring (M) is supported by a plurality o levers (LA) made integral with the diaphragm spring (M) and reduced in number in order to allow the bolts (BU) to be located between two adjacent levers (LA) and close to them.

16. Crankshaft for a reciprocating engine according to anyone of claims 13-15, **characterized in that** the ventilation slots (FE) are arranged so as not to interrupt the rim of the cylinder (34) facing the flanged disc (DP) and so as not to counteract the locking action of the bolts (BU).

## Patentansprüche

1. Kurbelwelle für einen Hubkolbenmotor, eine Kupplungsscheibe (F), die auf einer Getriebewelle (CO) angebracht ist, eine Kurbelwellen-Baugruppe, die mit der Kurbelwelle (AM) und mit einer Druckplatte (S) verbunden ist, die wiederum mit der Getriebewelle (CO) verbunden ist, wobei beide ringförmige Anpress-Flächen für die Kupplungsscheibe (F) aufweisen und die Kurbelwellen-Baugruppe eine angeflanschte Scheibe (DP) umfasst, die als dünne zylindrische Scheibe mit hochgezogenem Rand ausgelegt ist und einen Innenraum für ein Schwungrad (V) aufweist, und die angeflanschte Scheibe (DP) des weiteren mit einer ringförmigen Anpress-Fläche für die Kupplungsscheibe (F) versehen ist und am Rand einen Zahnkranz (CA) aufweist, **dadurch gekennzeichnet, dass** das Schwungrad (V) mit Hilfe einer Feder (m) an die angeflanschte Scheibe (DP) gekoppelt ist und dass die angeflanschte Scheibe (DP) eine Vorrichtung umfasst, um vom Schwungrad (V) getrennt zu werden, wenn eine bestimmte Drehzahl erreicht wird.

2. Kurbelwelle für einen Hubkolbenmotor nach Anspruch 1, **dadurch gekennzeichnet, dass** die Vorrichtung für das Trennen vom Schwungrad (V) Kipphebel (BI) umfasst, die gleichmäßig auf dem Umfang verteilt sind und an der angeflanschten Scheibe (DP) angebracht sind, wobei die Kipphebel (BI) der Kuppelwirkung der Feder (m) entgegenwirken, wenn die bestimmte Drehzahl erreicht wird.

3. Kurbelwelle für einen Hubkolbenmotor nach Anspruch 2, **dadurch gekennzeichnet, dass** die Kipphebel (BI) einen zentralen Hauptkörper (17) aufweisen und schwenkbar auf einem angeflanschten Drehzapfen (11) sitzen, der mit Hilfe von Bolzen (13) an der angeflanschten Scheibe (DP) angebracht ist.

4. Kurbelwelle für einen Hubkolbenmotor nach einem der Ansprüche 2 und 3, **dadurch gekennzeichnet, dass** jeder Kipphebel. (BI) zum Teil von einer Schwungmasse (16) verdeckt wird, wobei die verschiedenen Schwungmassen (16) einen kontinuierlichen Ring mit einem niedrigen aerodynamischen Widerstand bilden.

5. Kurbelwelle für einen Hubkolbenmotor nach Anspruch 4, **dadurch gekennzeichnet, dass** die Schwungmassen auf dem Hauptkörper (17) der Kipphebel (BI) angebracht sind, indem ein Zahn (19) mit Hilfe eines Bolzens (21) oder durch Verschweißen mit einem Schlitz (20) verbunden ist.

6. Kurbelwelle für einen Hubkolbenmotor nach einem der vorhergehenden Ansprüche, **dadurch gekennzeichnet, dass** sie eine Nabe (7) des Schwungrades (V) und ein Kugellager (8) umfasst, das mit einer Dichtlippe (22) versehen ist, wobei der äußere Ring (9) des Kugellagers an der Nabe des Schwungrades befestigt ist und der innere Ring (10) Bestandteil der Hülse (C) ist, an der die Kipphebel (BI) angreifen.

7. Kurbelwelle für einen Hubkolbenmotor nach einem der vorhergehenden Ansprüche, **dadurch gekennzeichnet, dass** das Schwungrad (V) aus einer gegossenen Metallplatte besteht und so geformt ist, dass sie eine erste ringförmige Oberfläche für die Verbindung zu einer Reibungsdichtung (G), die an der angeflanschten Scheibe (DP) angeordnet ist, und eine zweite ringförmige Oberfläche (SC) für die Verbindung zu einer Bremsvorrichtung (FC) aufweist, die eingegangen wird, wenn die angeflanschte Scheibe (DP) vom Schwungrad getrennt ist.

8. Kurbelwelle für einen Hubkolbenmotor nach Anspruch 7, **dadurch gekennzeichnet, dass** die Metallplatte als ringförmiger Kanal (5) ausgeführt ist, der ein schweres Material aufnimmt.

9. Kurbelwelle für einen Hubkolbenmotor nach einem der Ansprüche 7 oder 8, **dadurch gekennzeichnet, dass** die Bremsvorrichtung (FC) Reibungselemente (T) umfasst und von einem Element getragen wird, das auch einen Dichtungsring (TE) der Motorwelle (AM) hält.

10. Kurbelwelle für einen Hubkolbenmotor nach einem der Ansprüche 2 bis 9, **dadurch gekennzeichnet, dass** die Anpresskraft, die von der Feder (m) auf das Schwungrad (V) ausgeübt wird, wenn das Schwungrad mit der angeflanschten Scheibe (DP) verbunden ist, höher ist als die mittlere Kraft, die erforderlich ist, um die Drehwegung des Schwungrads (V) sicherzustellen, und niedriger als die Kraft, die den Drehmomentspitzen entspricht, die bei den Drehzahlen auftreten, bei denen das Schwungrad mit der angeflanschten Scheibe (DP) verbunden ist.

11. Kurbelwelle für einen Hubkolbenmotor nach einem der vorhergehenden Ansprüche, **dadurch gekennzeichnet, dass** die Druckplatte (S) aus einer Leichtmetalllegierung besteht.

12. Kurbelwelle für einen Hubkolbenmotor nach einem der vorhergehenden Ansprüche, **dadurch gekennzeichnet, dass** die Druckplatte (S) unter der Einwirkung eines Kupplungsdeckels (CP) und einer Membranfeder (M) gegen die angeflanschte Scheibe (DP) gepresst wird, wobei der Kupplungsdeckel (CP) aus verschiedenen in einer Baugruppe zusammengefassten dünnen Metallblechen besteht, die ein kastenförmiges Element bilden.

13. Kurbelwelle für einen Hubkolbenmotor nach Anspruch 12, **dadurch gekennzeichnet, dass** der Kupplungsdeckel (CP) aus einem äußeren Zylinder (34) besteht, in dem die Druckplatte zusammen mit den Verbindungsstangen (BL) angeordnet ist, die durch Lüftungsschlitze (FE) teilweise aus dem Zylinder (34) ragen.

14. Kurbelwelle für einen Hubkolbenmotor nach Anspruch 13, **dadurch gekennzeichnet, dass** der Kupplungsdeckel (CP) mit der angeflanschten Scheibe (DP) mit Hilfe von langen Bolzen (BU) verbunden ist, die einen zylindrischen Kopf (32) aufweisen und von speziellen Sitzen (33) des Zylinders (34) aufgenommen werden.

15. Kurbelwelle für einen Hubkolbenmotor nach Anspruch 14, **dadurch gekennzeichnet, dass** die Membranfeder (M) von mehreren Hebeln (LA), die in die Membranfeder (M) integriert wurden, unterstützt wird, und dass die Anzahl der Hebel (LA) verringert ist, damit die Bolzen (BU) zwischen zwei nebeneinander liegenden Hebeln (LA) und in ihrer direkten Nähe platziert werden können.

16. Kurbelwelle für einen Hubkolbenmotor nach einem der Ansprüche 13 bis 15, **dadurch gekennzeichnet, dass** die Lüftungsschlitze (FE) so angeordnet sind, dass sie den Rand des Zylinders (34), der zur angeflanschten Scheibe weist, nicht unterbrechen und dass sie der verriegelnden Wirkung der Bolzen (BU) nicht entgegenwirken.

## Revendications

1. Vilebrequin pour un moteur alternatif, un disque d'embrayage (F) monté sur un arbre de transmission (CO), un ensemble de vilebrequin associé au vilebrequin (AM) et un plateau de pression (S) associé à l'arbre de transmission (CO), les deux ayant des surfaces de pression annulaires pour le disque d'embrayage (F), l'ensemble de vilebrequin comprenant un disque à collerette (DP), le disque à collerette (DP) ayant la forme d'une mince coupelle creuse cylindrique offrant un espace interne à un volant (V), le disque à collerette (DP) étant en outre doté de la surface de pression annulaire pour le disque d'embrayage (F) et supportant sur sa périphérie une jante dentelée (CA), **caractérisé en ce que** le volant (V) est couplé au moyen d'un ressort (m) au disque à collerette (DP) et **en ce que** le disque à collerette (DP) comprend des moyens de désengagement du volant (V), lorsqu'une vitesse de rotation particulière est atteinte.

2. Vilebrequin pour un moteur alternatif selon la revendication 1, **caractérisé en ce que** lesdits moyens de désengagement du volant (V) comprennent des culbuteurs également espacés (BI) fixés sur le disque à collerette (DP), lesdits culbuteurs (BI) compensant l'action d'accouplement du ressort (m), lorsque ladite vitesse de rotation particulière est atteinte.

3. Vilebrequin pour un moteur alternatif selon la revendication 2, **caractérisé en ce que** lesdits culbuteurs (BI) comprennent un corps central (17) pivotant sur un pivot à collerette (11) fixé sur le disque à collerette (DP) par des boulons (13).

4. Vilebrequin pour un moteur alternatif selon une quelconque des revendications 2 et 3, **caractérisé en ce que** chaque culbuteur (BI) est partiellement protégé par une masse centrifuge (16), l'ensemble des masses centrifuges (16) formant un anneau continu offrant une faible résistance aérodynamique.

5. Vilebrequin pour un moteur alternatif selon la revendication 4, **caractérisé en ce que** les masses centrifuges (16) sont fixées au corps central (17) des culbuteurs (BI) par l'accouplement d'un ensemble de dents (19) à une fente (20) au moyen d'un boulon (21) ou par la soudure.

6. Vilebrequin pour un moteur alternatif selon une quelconque des revendications précédentes, **caractérisé en ce qu'**il comprend un moyeu (7) du volant (V) et un roulement à billes (8) équipé d'une lèvre d'étanchéité à graisse (22), l'anneau externe (9) du roulement à billes étant fixé au moyeu du volant, et l'anneau interne (10) faisant partie intégrante d'un collet (c) s'engageant dans les culbuteurs (B2).

7. Vilebrequin pour un moteur alternatif selon une quelconque des revendications précédentes, **caractérisé en ce que** le volant (V) est construit dans une feuille de métal moulée, et est façonné de façon à fournir une première surface annulaire pour l'engagement avec un joint statique de friction (G) disposé sur le disque à collerette (DP), et une seconde surface annulaire (5c) pour l'engagement avec un dispositif de freinage (FC), lorsque le volant (V) est désengagé du disque à collerette (DP).

8. Vilebrequin pour un moteur alternatif selon la revendication 7, **caractérisé en ce que** la feuille de métal est formée comme un canal annulaire (5) recevant un matériau lourd.

9. Vilebrequin pour un moteur alternatif selon une quelconque des revendications 7 ou 8, **caractérisé en ce que** le dispositif de freinage (FC) comprend des éléments de friction (T), et est soutenu par un même corps recevant une bague d'étanchéité (TE) de l'arbre moteur (AM).

10. Vilebrequin pour un moteur alternatif selon une quelconque des revendications 2 à 9, **caractérisé en ce que** la force de pression exercée par le ressort (m) sur le volant (V), lorsque le volant est en prise avec le disque à collerette (DP), est supérieure à la force moyenne requise pour assurer le mouvement rotatif du volant (V), et inférieure à la force correspondant aux valeurs de crête du couple apparaissant à des vitesses de rotation auxquelles le volant est en prise avec le disque à collerette (DP).

11. Vilebrequin pour un moteur alternatif selon une quelconque des revendications précédentes, **caractérisé en ce que** le plateau de pression (S) est en alliage léger.

12. Vilebrequin pour un moteur alternatif selon une quelconque des revendications précédentes, **caractérisé en ce que** le plateau de pression (S) est pressé contre le disque à collerette (DP) sous l'action d'un couvercle d'embrayage (CP) et d'un diaphragme (M), le couvercle d'embrayage (CP) étant formé en assemblant de minces feuilles de métal pour former un élément en forme de boîte.

13. Vilebrequin pour un moteur alternatif selon la revendication 12, **caractérisé en ce que** le couvercle d'embrayage (CP) est composé d'un cylindre périphérique (34) au sein duquel le plateau de pression est disposé conjointement avec des bielles (BL) ressortant partiellement à l'extérieur du cylindre (34) à travers des fentes d'aération (FE).

14. Vilebrequin pour un moteur alternatif selon la revendication 13, **caractérisé en ce que** le couvercle d'embrayage (CP) est relié au disque à collerette (DP) au moyen de longs boulons (BU) ayant une tête cylindrique (32) logée dans des sièges spéciaux (33) du cylindre (34).

15. Vilebrequin pour un moteur alternatif selon la revendication 14, **caractérisé en ce que** le diaphragme (M) est soutenu par une pluralité de leviers (LA) faisant partie intégrante du diaphragme (M) et en nombre réduit, afin de permettre aux boulons (BU) d'être situés entre deux leviers adjacents (LA) et à proximité de ceux-ci.

16. Vilebrequin pour un moteur alternatif selon une quelconque des revendications 13 à 15, **caractérisé en ce que** les fentes d'aération (FE) sont disposées de façon à ne pas interrompre la jante du cylindre (34) faisant face au disque à collerette (DP) et à ne pas annihiler l'action de verrouillage des boulons (BU).
